# EUROPÄISCHE PATENTSCHRIFT

(11) **EP 2 930 543 B1**
(45) Veröffentlichungstag und Bekanntmachung des Hinweises auf die Patenterteilung: **15.09.2021**
(21) Anmeldenummer: 14164296.7
(22) Anmeldetag: 10.04.2014
(51) Int. Cl.: G01V 8/20, A01C 7/10

(54) **Fallrohrsensor und Verfahren zur Einzelkornerkennung**
Downpipe sensor and method for detecting single grains
Capteur de tube de descente et procédé de reconnaissance de mono-graines

(43) Veröffentlichungstag der Anmeldung: 14.10.2015
(73) Patentinhaber: Müller-Elektronik GmbH, 33154 Salzkotten (DE)
(72) Erfinder: LIEBICH, Martin, 36287 Breitenbach (DE); KLOCKE, Jens, D-33154 Salzkotten (DE); MARTELLA, Paulo, 33154 Salzkotten (DE)
(74) Vertreter: Wickord, Wiro

(56) Entgegenhaltungen:
- US-A- 5 936 234
- US-A- 6 093 926
- None

## Beschreibung

Die Erfindung betrifft einen Fallrohrsensor zur Einzelkornerkennung von Körnern in einem Fallrohr mit einem vorgegebenen Messfeld, an der eine Sendeeinrichtung und eine Empfangseinrichtung im Abstand zueinander angeordnet sind, wobei die von der Sendeeinrichtung ausgesendeten Lichtstrahlen bei freiem Strahlengang durch den Fallrohr-Innenraum auf die Empfangseinrichtung geführt sind und bei einem Durchflug eines Korns zumindest teilweise abgeschwächt sind, und bei dem die Empfangseinrichtung von einem eine vorgegebene Anzahl von Empfangselementen aufweisenden Zeilenelement gebildet ist, sowie dessen Verfahren zur Einzelkornerkennung und dessen Verwendung in landwirtschaftlichen Maschinen.

Die Einzelkornsaat wird bei Feldkulturen eingesetzt, deren Saatgut teuer ist, und deren Ertrag von dem gleichmäßigen Pflanzabstand auf dem Acker abhängt. Die Einzelkornsämaschine zieht zunächst mit der Säschar eine Särinne in das Saatbett, die Saatgutzuführung erfolgt jedoch einzeln für jedes Saatkorn. Dabei werden mit Hilfe eines Vereinzelungsaggregats die Saatkörner vereinzelt durch das Fallrohr zur Särinne gefördert. Die Einzelkornsämaschine ist variabel einsetzbar für die Aussaat von beispielsweise Mais, Sonnenblume, Weizen, Soja, Rüben sowie verschiedene andere Saatgüter, wobei heute hohe Aussaatgeschwindigkeiten und sehr gute Vereinzelungswerte erzielt werden. Mit Hilfe von pneumatischen oder mechanischen Regelsystemen werden einzelne Saatkörner zentimetergenau in einem vorher definierbaren Abstand in der Särinne abgelegt. Zur Optimierung und Kontrolle des Aussaatergebnisses wird die Vereinzelungsqualität durch Sensoren am Fallrohr ständig überwacht. Vornehmlich wird dabei die Gesamtmenge der ausgebrachten Körner auf Übereinstimmung mit den Vorgaben des Maschinenbedieners überwacht. Zum Teil wird auch der zeitliche Abstand zwischen den einzeln fallenden Saatkörnern gemessen und daraus der Variationskoeffizient sowie die Anzahl der Fehl- und Doppelstellen ermittelt. Die Übertragung dieser Informationen erfolgt von jedem einzelnen Sensor zur übergeordneten Recheneinheit der Einzelkornsämaschine. Dort stehen also Qualitätsparameter für jede einzelne Saatreihe zur Verfügung, die einerseits dem Maschinenbediener über ein Display angezeigt, andererseits zu Gesamtqualitätsparametern verrechnet werden, wodurch der Maschinenbediener überhaupt erst in die Lage versetzt werden kann, sofort Einfluss auf die Ablagequalität zu nehmen, z.B. durch Anpassung der Fahrgeschwindigkeit oder Veränderung der Einstelllungen an der Drillmaschine. Heutige Sensoren arbeiten mit einem oder mehreren Lichtdetektoren nach dem Lichtschrankenprinzip. Dies hat zur Folge, dass meistens nur große Körner wie Mais oder Sojabohne detektiert werden können. Zudem haben diese Sensoren Probleme bei der Erkennung doppelter Saatkörner und erfassen zum Teil auch Schmutz, der durch das Fallrohr fällt und dabei das Zählergebnis verfälscht.

In der EP 1 148 352 B1 ist ein optischer Sensor mit einem Sender und einem im Abstand zu diesem angeordneten Empfänger offenbart, bei dem der Empfänger ein Zeilenelement mit einer Mehrzahl von Empfangselementen ist. Dabei sind die vom Sender emittierten Sendelichtstrahlen auf die Empfangselemente so fokussiert, dass die Strahlbreite der Sendelichtstrahlen quer zur Längsachse des Zeilenelements vom Sender zum Empfänger hin kontinuierlich abnimmt, so dass die Strahlbreite der Sendelichtstrahlen an der Oberfläche des Empfängers der Breite des Zeilenelements entspricht. Nachteilig ist zur Erzeugung dieses abnehmenden Lichtbandes hinter dem Sender eine aufwendige Anordnung von einer asphärischen Linse mit einer nachgeordneten Zylinderlinse und einem Umlenkspiegel erforderlich, die im Gehäuseelement der Gabellichtschranke viel Platz beansprucht. Des Weiteren basiert die Erkennung im Wesentlichen auf der Erfassung von Konturen und/oder Kanten von Objekten, die im Strahlengang der Sendelichtstrahlen angeordnet sind und somit einen Teil der Empfangselemente kontinuierlich abschatten. Das Erfassen von kurzzeitig den Strahlengang passierenden Objekten, wie es für die Erfassung von Saatkörnern erforderlich ist, wird hingegen in der EP 1 148 352 B1 nicht offenbart.

In der WO 2006/087176 A1 ist eine Vorrichtung zum Messen der Anzahl und Häufigkeit der Samen in einem Strom von Saatkörnern beschrieben, die aus einer Beleuchtungseinheit mit Leuchtdioden und einer gegenüberliegenden Sensoreinheit mit einem CCD-Zeilensensor. Nachteilig ist zur Fokussierung der Abbildung eines Saatkorns auf dem Zeilensensor eine Objektivlinse erforderlich. Weiterhin ist eine aus einem parallel gegeneinander stehenden Spiegelpaar bestehende Spiegelanordnung vor der Objektivlinse notwendig, die die Tiefenschärfe der Optik so erweitert, dass die Saatkörner unabhängig von der Position innerhalb der Messöffnung scharf abgebildet und gezählt werden können.

In der EP 1 779 714 A1 ist eine Vorrichtung zum optischen Zählen kleiner Körperchen gezeigt, die einen Messraum aufweist, der von lichtdurchlässigen und planen Scheiben gebildet wird. Hierbei sind die Lichtemitter und Lichtdetektoren der Sensoren abgedichtet und hinter den lichtdurchlässigen Scheiben angeordnet. Nachteilig ist eine dem Lichtemitter nachgeordnete Kollimatorlinse zur Auffächerung der Lichtstrahlen auf die Breite des Messraums erforderlich. Insgesamt weist die Vorrichtung zwei um 90° zueinander versetzte Lichtdetektoren und Lichtemitter auf wodurch eine Erkennung und Zählung der Saatkörner unabhängig von der Position innerhalb des Messraums ermöglicht wird. Dies ist erforderlich, da beim erfindungsgemäßen Einsatz der Vorrichtung, in der Förderleitung zwischen dem Vorratsbehälter und einem Dosierer, in der Regel mehrere Saatkörner gleichzeitig den Messraum passieren können.

In der DD 260 764 A1 ist ein Verfahren zur Bestimmung des Körnungsverhältnisses eines Korngemisches beschrieben, bei dem die Körner durch ein paralleles Lichtband geführt und von einer CCD-Zeilenkamera zyklisch in schneller Folge zeilenweise abgetastet werden. Dabei tastet die CCD-Zeilenkamera das Lichtband auf einer Mattscheibe ab, die vor der Kamera angeordnet ist und ordnet die Signale abhängig von der Korngröße in Klassen unterschiedlicher Pixellängen ein. Eine Einzelkornerfassung ist bei diesem Verfahren nicht vorgesehen.

In der EP 1 726 200 A1 ist ein Verfahren zur Ermittlung der Qualität von landwirtschaftlichen Schüttgütern offenbart, deren Bestandteile wie z.B. Saatkörner einer Sämaschine durch einen Sensor hindurch fallen, um gezählt zu werden. Zu diesem Zweck besteht der Sensor aus einer Lasereinheit mit einer optischen Linse und einem gegenüberliegenden CCD-Zeilensensor mit einer optischen Linse, sowie in einem Winkel von 90° dazu eine weitere Lasereinheit mit einer optischen Linse mit einem dazugehörigen weiteren CCD-Zeilensensor mit einer optischen Linse, so dass sich die Lichtstrahlen in einem Winkel von 90° schneiden. Die hierdurch erhaltenen Ortspunkte werden in einer Auswerteeinrichtung addiert, um ein Volumenmaß für das Körpervolumen eines Saatkorns zu erhalten, aus dem dann die Anzahl der Samenkörner sowie die Reindichte des Schüttgutes berechnet werden. Eine eindimensionale Anordnung einer Lasereinheit mit einem gegenüberliegenden CCD-Zeilensensor ist bei diesem Verfahren nicht vorgesehen.

Das aus der US 6 093 926 A (D1) bekannte Verfahren zum Zählen von Samenkörnern in der Partikelströmung durch ein primäres und/oder sekundäres Rohr eines Luftabgabesystems, wie beispielsweise einer Drillmaschine, umfasst eine Strahlungsquelle mit einem Senderlinsenkörper, um einen Erfassungsbereich in dem Saatrohr mittels im wesentlichen gleichförmiger kollimierter Lichtstrahlen auszuleuchten, und einen Lichtstrahlungsdetektor mit einem Empfängerlinsenkörper, um die Anzahl von in dem Samenrohr strömenden Teilchen zu überwachen. Dabei sind die Strahlungsquelle und der Lichtstrahlungsdetektor entfernt vom Rohr angeordnet und zur optischen Übertragung mittels Lichtleiter und optischer Verbinder mit dem Senderlinsenkörper bzw. dem Empfängerlinsenkörper verbunden. Im Lichtstrahlungsdetektor ist ein Fotodiodenfeld mit einem Strom-Frequenzwandler integriert, wodurch eine Unterbrechung der Lichtstrahlen detektiert und als ein Pulssignal ausgegeben wird.

Aus der weiterhin genannten US 5 936 234 A ist ein Sähmaschinen Monitorsystem mit faseroptischen Sensoren bekannt, das eine Master-Einheit aufweist, an der eine oder mehrere Zähleinheiten angeschlossen sind. Jede Zähleinheit umfasst eine Lichtquelle und eine optische Einrichtung zu Ausbilden der Lichtstrahlen, die einen Erfassungsbereich im Saatgutrohr durchlaufen und dann in einen Lichtstrahlendetektor eindringen. Dieser Lichtstrahlendetektor ist als eine Fotodiode mit einer großflächigen Sensorfläche ausgebildet.

Der Erfindung liegt daher die Aufgabe zugrunde, einen Fallrohrsensor und ein Verfahren zur Einzelkornerkennung von Körnern in einem Fallrohr anzugeben, mit dem durch die Anordnung einer Sendeeinrichtung und einer Empfangseinrichtung am Fallrohr unterschiedliche Körner zuverlässig im gesamten Raum innerhalb des Fallrohrs erkannt werden und dabei eindeutig zwischen Körnern und Schmutzpartikeln unterschieden wird. Weiterhin sollen die Gehäuseteile für die Beleuchtungseinheit und die Sensoreinheit kompakt ausgeführt sein.

Diese Aufgabe wird durch die Merkmale des Anspruchs 1 und ein Verfahren gemäß Anspruch 12 gelöst. Die Verwendung ist in Anspruch 18 angegeben. Ausführungsformen der Erfindung sind in den Unteransprüchen beschrieben.

Bei dem erfindungsgemäßen Fallrohrsensor umfasst die Sendeeinrichtung eine oder mehrere in einer Zeile nebeneinander angeordnete Leuchtdioden mit Lochblenden und ein Reflektorelement. Dabei ist ein Reflektorelement prismenförmig als ein rechtwinkliges Dreieck ausgeführt, bei dem die beiden senkrecht aufeinander stehenden Flächen eine Eintrittsfläche und eine Austrittsfläche für die von den Leuchtdioden ausgesendeten Lichtstrahlen bilden. Die dritte Fläche des Prismas bildet eine Reflexionsfläche für die Lichtstrahlen, die nach dem Effekt der Totalreflexion zur verlustarmen Umlenkung der Lichtstrahlen genutzt wird.

Die Lichtstrahlen werden von den Leuchtdioden quer zu einer Empfangsachse der Empfangseinrichtung ausgesendet und über die Lochblenden gebündelt, wobei das Streulicht der Leuchtdioden durch die Lochblenden abgeschattet wird und gleichzeitig die einzelnen Leuchtdioden in einem definierten Abstand zueinander in den Haltevorrichtungen der Lochblenden gehalten werden. Anschließend werden die Lichtstrahlen über die Eintrittsfläche in das Reflektorelement geführt und über dessen Reflexionsfläche durch Totalreflexion zur Austrittsfläche zu einem Lichtband von parallel ausgerichteten Lichtstrahlen umgelenkt. Um einen möglichst hohen Transmissionsgrad für den gesamten Strahlengang zu erreichen, werden die Lichtstrahlen senkrecht auf die Eintrittsfläche geführt, so dass die Lichtstrahlen nicht gebrochen werden. Die Vorteile dieses totalreflektierenden Prismas gegenüber einer Spiegelanordnung sind unter anderem die Lageunveränderlichkeit der spiegelnden Flächen, die kompakte Bauweise und der höhere Transmissionsgrad bzw. geringeren Reflexionsverluste. Resultierend aus dieser Anordnung leuchtet das Lichtband im Messfeld den gesamten Fallrohr-Innenraum mit annähernd gleich starker Intensität vollständig aus und tritt parallel zur Empfangsachse der Empfangseinrichtung darin ein. Dabei wird über das Zeilenelement der Empfangseinrichtung die gesamte Breite des Fallrohr-Innenraums und damit das Lichtband lückenlos erfasst. Diese Lichtstrahlführung führt zu einer besonders großen Nachweisempfindlichkeit des Fallrohrsensors, da der gesamte Raum innerhalb des Fallrohrs überwacht wird, wodurch mehr Informationen als bei den bisher üblichen Sensoren zur Verfügung stehen.

Vorteilhaft kann die Kombination aus einer Leuchtdiode, Lochblende und Reflektorelement durch Vervielfachung auf jede gewünschte Messfeldbreite angepasst werden und ist damit für unterschiedlich große Ausführungen von Fallrohren einsetzbar. Gleichzeitig ermöglicht deren kompakte Bauweise und Umlenkung der Lichtstrahlen, dass die Sendeeinrichtung in einem Gehäuseelement mit geringen Abmessungen an der Fallrohr-Außenwand angebracht werden kann, ohne dass es dabei vom Fallrohr abragt.

Darüber hinaus besitzt die Reflexionsfläche des Reflektorelements mehrere konvexe Wölbungen, die jeweils vor einer Leuchtdiode sitzen. Durch die derart gewölbte Wandung der Reflexionsfläche werden die reflektierten Lichtstrahlen bei der Totalreflexion in parallele Lichtstrahlen überführt. Das Reflektorelement ist aus einem transparenten Kunststoff wie Polymethylmethacrylat (PMMA) hergestellt, das auch als Acrylglas bekannt ist. Dieses Material überträgt die Lichtstrahlen besser als Mineralglas, ist witterungs- und alterungsbeständig und ermöglich eine einfache Bearbeitung. Transparente Kunststoffe werden unter anderem in der Lichttechnik z.B. für Lichtwellenleiter und in der Augenoptik z.B. für harte Augenlinsen und Brillengläser eingesetzt.

Der Fallrohrsensor besitzt mit der Sendeeinrichtung und der Empfangseinrichtung zwei voneinander getrennte Einheiten. Der Messvorgang bei diesem Sensor geschieht an einer definierten Stelle des Fallrohrs, nämlich dem vorgegebenen Messfeld. An dieser Stelle besitzt das Fallrohr an seiner Vorder- und Rückseite zwei transparente Öffnungen, in denen die Sende- und Empfangseinrichtung beidseitig an dem Messfeld in der ersten und zweiten Öffnung entlang der Empfangsachse angebracht sind. Dabei sind die Sendeinrichtung in einem ersten Gehäuseelement und die Empfangseinrichtung in einem zweiten Gehäuseelement angeordnet. Die transparenten Öffnungen sind bei verschiedenen Typen von Fallrohren unterschiedlich ausgeführt. Manche Arten von Fallrohren besitzen Öffnungen, andere sind aus einem lichtdurchlässigen Material gefertigt und somit geschlossen. Die Gehäuseelemente für die Sende- und Empfangseinrichtung sind universell ausgelegt, um an allen Typen von Fallrohren zu arbeiten, wobei sowohl die mechanischen als auch die elektronischen Voraussetzungen erfüllt werden. Zusätzlich sind die Sende- und Empfangseinrichtung mit einem Befestigungsband am Fallrohr gehalten.

Da die Sende- und Empfangseinrichtung bei manchen Arten von Fallrohren direkt in den Fallrohr-Innenraum des Messfeldes ragen, müssen sie zum Schutz gegen Staub und Schmutzpartikel geschützt werden. Aus diesem Grund schließen die Sende- und Empfangseinrichtung jeweils mit einer Schutzscheibe die erste und zweite Öffnung des Fallrohrs ab, wobei die Schutzscheibe plan zum Fallrohr-Innenraum ausgeführt ist, um Ansammlungen von Schmutz- und Staubpartikel an Kanten oder Rillen zu vermeiden. Diese Schutzscheiben sind aus einem transparenten Material wie z.B. Glas mit großem Härtegrad und geringer Infrarot-Lichtdämpfung gefertigt.

Die Leuchtdioden der Sendeeinrichtung erzeugen Lichtstrahlen einer Wellenlänge im Spektralbereich zwischen 550 nm und 1100 nm. Vorteile sind dabei beispielsweise eine niedrige Dämpfung sowie eine geringe Streuung durch Staub innerhalb des Messfeldes.

Die Empfangseinrichtung besteht aus einem optischen Zeilensensor als Zeilenelement mit einer Vielzahl von Fotoelementen als Empfangselemente. Dabei kann der Zeilensensor aus einer oder mehreren PIN-Dioden-, CCD- oder CMOS-Zeilenelementen bestehen. Der Zeilensensor weist eine Auflösung von mehr als 50 DPI auf. Durch die hohe Auflösung können selbst kleine Körner identifiziert werden und von Schmutzpartikeln unterschieden werden. Da der Zeilensensor mit einer Taktfrequenz von mehr als 1 MHz getaktet wird, ist es möglich, eine hohe Abtastrate zu erzeugen, um insbesondere kleine Saatkörner bei einer sehr hohen Fallgeschwindigkeit mehrfach während des Durchflugs an der Messfläche abzutasten. Die Anzahl der Abtastungen für ein Korn geben einen Rückschluss auf die Geschwindigkeit des Korns im Fallrohr.

Weiterhin sind Mittel zur Erkennung von Flächen von im Lichtband angeordneten Körnern vorgesehen, die wenigstens eine Auswerteeinheit zur Auswertung der am Ausgang der Empfangseinrichtung anstehenden analogen Empfangssignale aufweisen. Dabei umfasst die Auswerteeinheit wenigstens einen A/D-Wandler, der das analoge Eingangssignal des Zeilensensors in digitale Daten umgewandelt, die dann für mehrere abgetastete Zeilen in einem Speicher gespeichert werden. Darüber hinaus werden im Speicher auch vorgegebene Referenzwerte für die Beleuchtung pro Pixel und Referenzwertebereiche für die Größe des Korns gespeichert. Durch Auswertung der abgeschatteten Flächen sowie der Flächenschwerpunkte in den gespeicherten Zeilen anhand der gespeicherten Referenzwerte ermittelt der Mikrocontroller die Anzahl der erkannten Körner sowie die Anzahl der Fehl- und Doppelstellen, die dann über eine Schnittstelle als ein Auswertesignal ausgegeben werden. Darüber hinaus dient die Schnittstelle dem Empfang neuer bzw. geänderter Referenzwerte. Außerdem umfasst die Auswerteeinheit einen Leuchtdiodentreiber, um den Strom der Leuchtdioden und damit die Intensität der Lichtstrahlen einzustellen.

Das erfindungsgemäße Verfahren zur Einzelkornerkennung mit dem Fallrohrsensor sieht vor, zunächst das Messfeld mittels des Leuchtbandes der Sendeeinrichtung mit parallelen Lichtstrahlen vollständig und gleichmäßig auszuleuchten und gleichzeitig das Messfeld zyklisch in aufeinanderfolgenden Zeilen abzutasten. Die Körner eines Gutstroms werden von einem Vereinzelungsaggregat vereinzelt durch das vorgegebene Messfeld im Fallrohr gefördert. Ein durch das Messfeld fallendes Korn oder Schmutzpartikel führt zu einer Unterbrechung des Leuchtbandes und tritt als Abschattung auf dem Zeilenelement der Empfangseinrichtung auf. Diese aktuell abgetasteten Zeilenwerte werden im Speicher gespeichert. Durch Auslesen des Speichers wird die Fläche abgeschatteter Punkte über mehrere Zeilen ermittelt und durch Vergleich mit den vorgegebenen Referenzwerten der Körner durch den Mikrocontroller bewertet. Anhand der vorgegebenen Referenzwerte wie zum Beispiel der Länge und Breite der abgeschatteten Fläche und der Mittelpunkte in der abgeschatteten Fläche werden die einzelnen Körner erkannt und es kann sehr genau zwischen Körnern und Schmutzpartikeln bzw. Staub unterschieden werden. Selbst wenn eine Konzentration an Schmutz zu einer gewissen Abschattung vom Pegel her führt, so wird der Schmutz nicht in den vordefinierten Grenzen der Breite bzw. Länge der Abschattungen liegen und wird somit genauso wie auch fremde Körner ausgeblendet. Schließlich werden die Informationen von erkannten Körnern über die Schnittstelle als Auswertesignal ausgegeben.

Die Informationen des Auswertesignals enthalten auch Angaben über die Zeitspanne zwischen zwei aufeinander folgende erkannte Körner und/oder die Anzahl der erkannten Körner in einer vorgegebenen Zeitspanne. Demzufolge lässt sich die Korndichte in der Särinne kontrollieren und auch steuern.

Im Speicher werden die Referenzwerte für die Beleuchtung pro Pixel der Zeile sowie Referenzwerte für die Länge, Breite und Versatz von Mittelpunkten der Abschattung durch die Körner gespeichert. Durch Speichern von unterschiedlichen Referenzwerten im Speicher ist die Auswertung auf Saatkörner unterschiedlicher Form wie zum Beispiel Mais, Sonnenblume, Weizen, Soja, Rüben oder Raps einstellbar. Vorteilhaft werden über die Schnittstelle neue oder geänderte Referenzwerte von einer Applikation übertragen und/oder wird eine Auswahl der unterschiedlichen Referenzwerte getroffen.

Gegenstand der Erfindung ist auch die Verwendung des oben beschriebenen Fallrohrsensors in landwirtschaftlichen Maschinen, die landwirtschaftliche Materialien in einem Gutstrom von Körnern fördern. Bevorzugt wird der Fallrohrsensor in Einzelkornsämaschinen eingesetzt, die Saatkörner nach der Vereinzelung durch ein Fallrohr zur Aussaat in einem vorher definierten Abstand in eine Särinne des Bodens ablegen. Des Weiteren wird dieser Fallrohrsensor auch in pneumatischen oder mechanischen Drillmaschinen oder in Düngestreuern eingesetzt, die beispielsweise körnigen Dünger gleichmäßig auf landwirtschaftliche Nutzflächen ausgeben. Besonders vorteilhaft ist dabei der Fallrohrsensor über die Schnittstelle in ein Steuerungssystem der landwirtschaftlichen Maschine eingebunden, so dass über dieses Steuerungssystem die Informationen aller eingesetzten Fallrohrsensoren zur Überwachung und/oder Anzeige der Vereinzelungsqualität genutzt werden können. Außerdem können dann über die Schnittstelle Daten für Diagnosezwecke und Updatevorgänge ausgetauscht werden.

Die Erfindung ist nachfolgend anhand von bevorzugten Ausführungsbeispielen unter Bezugnahme auf die Abbildungen beispielhaft erläutert. Dabei zeigt schematisch:
Fig. 1 die bevorzugte Ausführungsform des erfindungsgemäßen Fallrohrsensors mit beidseitig am Messfeld angeordneter Sende- und Empfangseinrichtung in Schnittansicht,
Fig. 2 den Fallrohrsensor mit erstem und zweiten Gehäuseelement und Verbindungsband in Vorderansicht,
Fig. 3 den Fallrohrsensor mit Strahlengang im Messfeld in schematischer Darstellung,
Fig. 4 die Auswerteeinheit des Fallrohrsensors als Blockschaltbild,
Fig. 5 die Sendeinrichtung mit Leuchtdioden und Reflektorelement in Schnittansicht,
Fig. 6 das Reflektorelement mit der Reflexionsfläche in Isometrieansicht,
Fig. 7 die Sendeinrichtung mit Leuchtband im Messfeld in Isometrieansicht,
Fig. 8 das analoge Empfangssignal einer nicht abgeschatteten Zeile,
Fig. 9 das analoge Empfangssignal einer Zeile in der Messphase für ein Maiskorn,
Fig. 10 das analoge Empfangssignal einer Zeile in der Messphase für ein Rapskorn im rieselnden Schmutz,
Fig. 11 die digitalen Empfangssignale mehrerer Zeilen für ein Rübenkorn,
Fig. 12 die digitalen Empfangssignale mehrerer Zeilen für einen Doppeltreffer von zwei Rapskörnern,
Fig. 13 die digitalen Empfangssignale mehrerer Zeilen für die Abtastung von Schmutz.

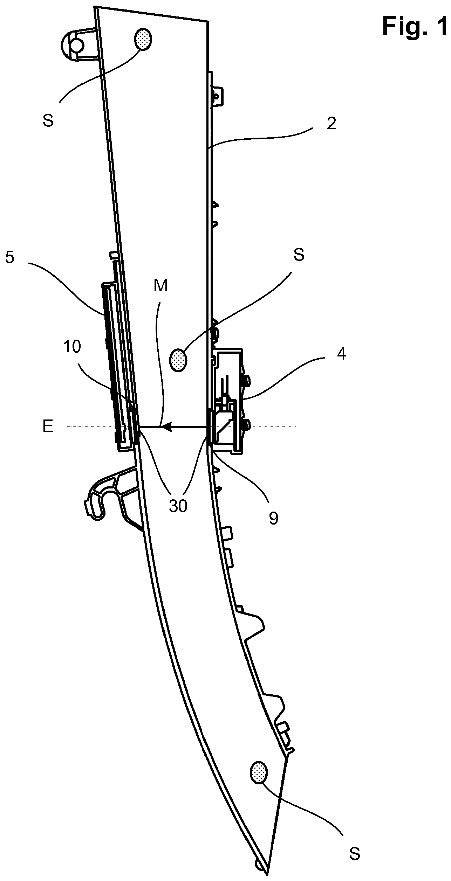

Fig. 1 zeigt die bevorzugte Ausführungsform des erfindungsgemäßen Fallrohrsensors 1 mit beidseitig am Messfeld M angeordneter Sende- 4 und Empfangseinrichtung 5 in Schnittansicht zusammen mit einem Fallrohr 2.

Die Sende- 4 und Empfangseinrichtung 5 sind entlang der Empfangsachse E in der ersten 9 und zweiten transparenten Öffnung 10 des Fallrohrs 2 angebracht und schließen diese jeweils mit einer Schutzscheibe 30 plan zum Fallrohr-Innenraum ab, so dass sich dort kein Staub ansammeln kann. In dem Fallrohr 2 werden vereinzelte Körner S durch das vorgegebene Messfeld M gefördert, das parallel zur Empfangsachse E der Empfangseinrichtung 5 liegt.

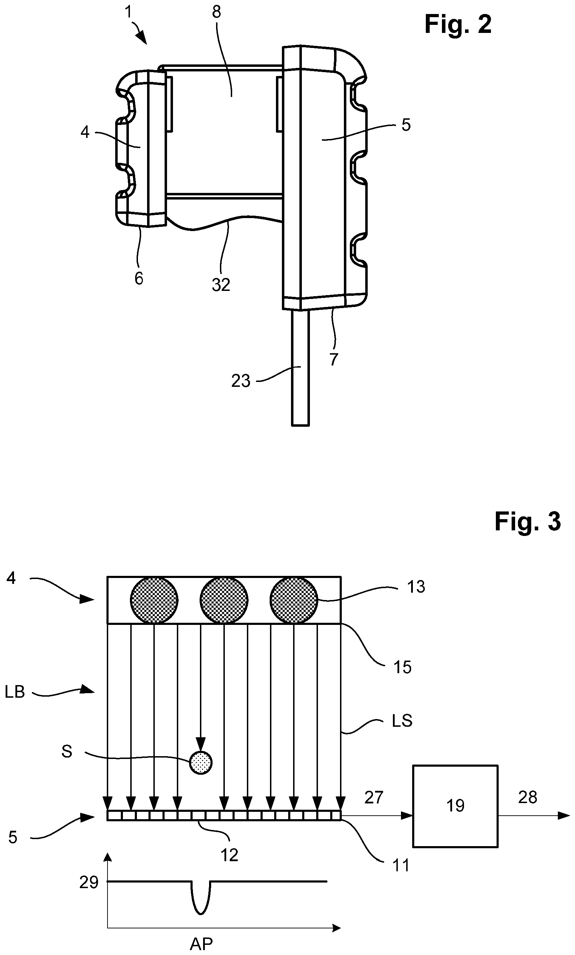

Fig. 2 zeigt den Fallrohrsensor mit erstem 6 und zweiten Gehäuseelement 7 und Befestigungsband 8 in Vorderansicht.

Linksseitig ist die Sendeeinrichtung 4 im ersten Gehäuseelement 6 und rechtsseitig ist die Empfangseinrichtung 5 im zweiten Gehäuseelement 7 angeordnet, wobei beide Gehäuseelemente 6, 7 mittels eines Verbindungsbandes 8 und der Versorgung 32 für die Sendeeinrichtung 4 verbunden sindwird. Zusätzlich umfasst die Empfangseinrichtung 5 die Schnittstelle 23.

Fig. 3 zeigt den Fallrohrsensor 1 mit Strahlengang im Messfeld M in schematischer Darstellung.

Anhand der vorzugsweise drei Leuchtdioden 13 und dem Reflektorelement 15 in der Sendeeinrichtung 4 wird ein Lichtband LB von parallel ausgerichteten Lichtstrahlen LS ausgesendet und gegenüber liegend ist das Zeilenelement 11 in der Empfangseinrichtung 5 angeordnet, das zwischen den Helligkeiten unterscheiden kann. Die Messmethode sieht vor, dass ein Korn S dieses Lichtband LB unterbricht und den Schatten direkt auf die lichtempfindlichen Empfangselemente 12 produziert.

Entsprechend gibt das Zeilenelement 11 für die abgeschatteten Punkte AP ein analoges Empfangssignal 27 mit einem reduzierten Sättigungspegel 29 ab. Dieses wird in der Auswerteeinheit 19 digitalisiert und gespeichert. Aus der Folge der gespeicherten Zeilen erhält die Auswerteeinheit 19 dann ein Abbild eines Korns S und kann entscheiden, wann die abgeschattete Fläche AF den gespeicherten Referenzwertebereichen entspricht und damit zum Erkennen eines einzelnen Korns S führt. Danach wird ein Auswertesignal 28 mit Informationen über das erkannte Korn S ausgegeben.

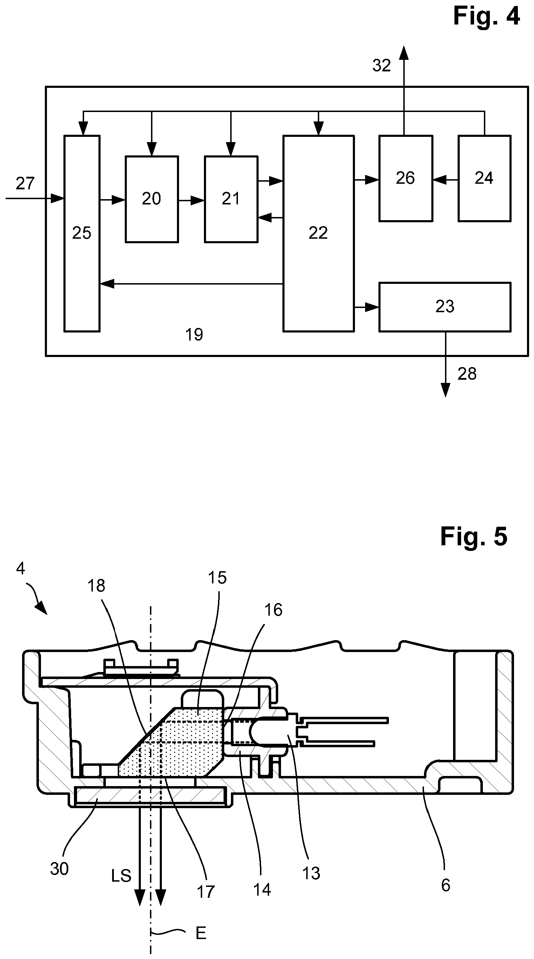

Fig. 4 zeigt die Auswerteeinheit 19 des Fallrohrsensors 1 als Blockschaltbild.

Die Auswerteeinheit 19 empfängt das analoge Empfangssignal 27 der Empfangseinrichtung 5 über die Zeilenelementsteuerung 25. Nachfolgend wird dieses Signal 27 vom A/D-Wandler 20 digitalisiert und im Speicher 21 gespeichert. Der Mikrocontroller 22 ermittelt mithilfe der gespeicherten digitalen Empfangssignale die abgeschattete Fläche AF über mehrere Zeilen und bewertet die abgeschattete Fläche AF durch Vergleich mit den im Speicher 21 gespeicherten Referenzwerten der Saatkörner S. Infolgedessen wird das Auswertesignal 28 über ein erkanntes Saatkorn S an der Schnittstelle 23 ausgegeben.

Außerdem umfasst die Auswerteeinheit 19 einen Leuchtdiodentreiber 26 sowie eine Versorgung 32 für die Sendeeinrichtung 4. Über den Leuchtdiodentreiber 26 ist der Strom der Leuchtdioden 13 in der Sendeeinrichtung 4 einstellbar.

Fig. 5 zeigt die Sendeinrichtung 4 mit Leuchtdioden 13 und Reflektorelement 15 in Schnittansicht.

Die Lichtstrahlen LS werden von den Leuchtdioden 13 quer zur Empfangsachse E der Empfangseinrichtung 5 ausgesendet und über die Lochblenden 14 gebündelt und anschließend über die Eintrittsfläche 16 in das Reflektorelement 15 geführt und über dessen Reflexionsfläche 18 durch Totalreflexion um 90° abgewinkelt zur Austrittsfläche 17 umgelenkt. Dabei ist das Reflektorelement 15 prismenförmig als ein rechtwinkliges Dreieck ausgeführt, bei dem die Ein- 16 und Austrittsfläche 17 senkrecht aufeinander stehen und die dritte schräg stehende Fläche durch die Reflexionsfläche 18 gebildet ist.

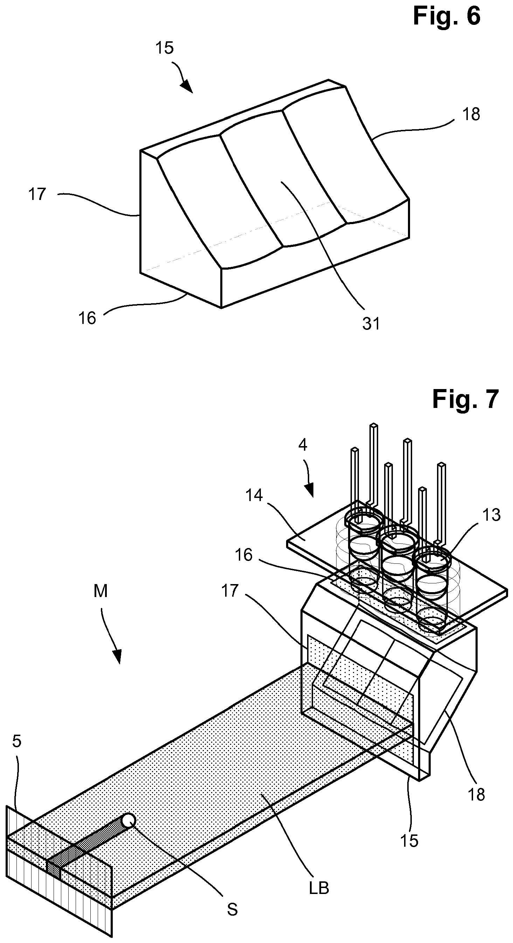

Fig. 6 zeigt das Reflektorelement 15 mit der Reflexionsfläche 18 in Isometrieansicht.

Die Reflexionsfläche 18 des Reflektorelements 17 besitzt drei konvexe Wölbungen 31, die jeweils vor einer der drei Leuchtdioden 13 sitzen. Auf Grund dieser gewölbten Wandung der Reflexionsfläche 18 werden die Lichtstrahlen LS bei der Totalreflexion parallelisiert.

Fig. 7 zeigt die Sendeeinrichtung 4 mit Leuchtband LB im Messfeld M in Isometrieansicht.

Wie in Fig. 5 detailliert beschrieben, werden von den vorzugsweise drei Leuchtdioden 13 Lichtstrahlen LS ausgesendet, die mittels der Lochblenden 14 und des Reflektorelements 15 zu einem Lichtband LB von parallel ausgerichteten Lichtstrahlen LS umgelenkt werden, so dass im Messfeld M der gesamte Fallrohr-Innenraum 2 mit annähernd gleich starker Intensität vollständig ausgeleuchtet wird und in die Empfangseinrichtung 5 eintritt.

Ein durch das Messfeld M fallendes Korn S bewirkt eine Strahlschattenzone und damit eine Abschattung auf dem Zeilenelement 11 der Empfangseinrichtung 5.

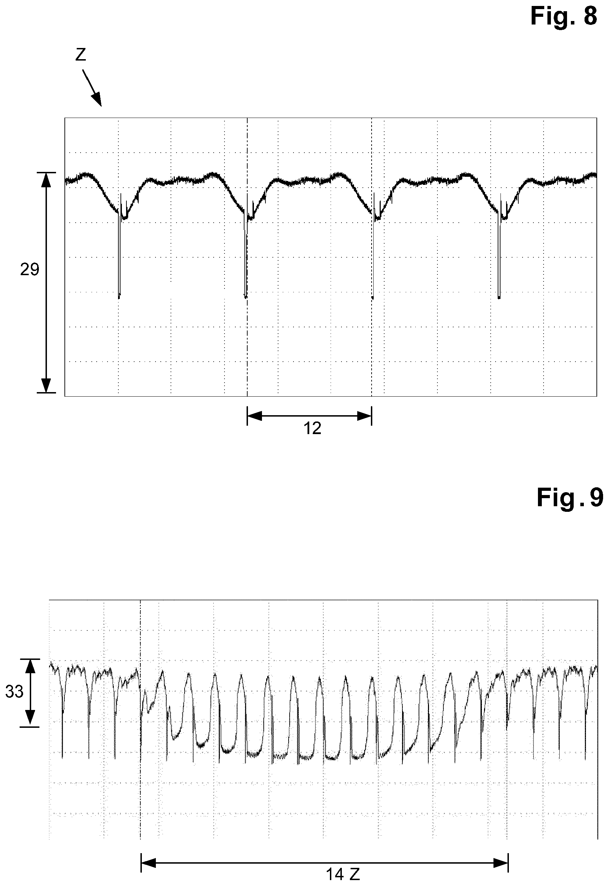

Fig. 8 zeigt das analoge Empfangssignal einer nicht abgeschatteten Zeile Z.

Hierbei ist das Zeilenelement 11 der Empfangseinrichtung 5 annähernd voll ausgeleuchtet und die Empfangselemente 12 des Zeilenelements 11 erreichen bei Vollaussteuerung ihren Sättigungspegel 29.

Fig. 9 zeigt das analoge Empfangssignal einer Zeile Z, während ein Maiskorn durch das Messfeld M hindurchtritt.

Hierbei werden bei den mittleren 14 abgetasteten Zeilen Z die Schwellwerte 33 der entsprechenden Empfangselemente 12 aufgrund der Abschattung durch das Maiskorn unterschritten.

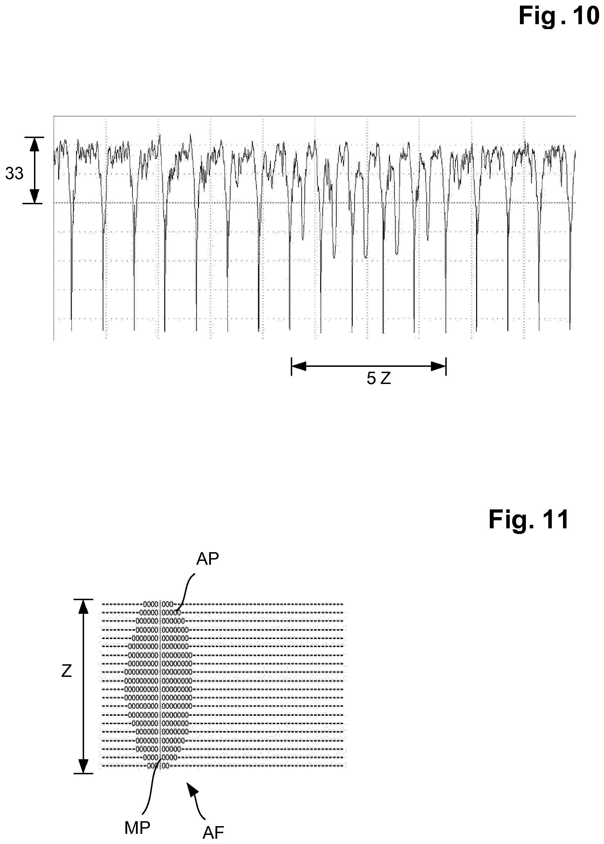

Fig. 10 zeigt das analoge Empfangssignal einer Zeile Z, während ein Rapskorn im rieselnden Schmutz durch das Messfeld M hindurchtritt.

Hierbei sind in den mittleren 5 abgetasteten Zeilen Z die Schwellwerte 33 der entsprechenden Empfangselemente 12 unterschritten, aufgrund der gleichzeitigen Abschattung durch das Rapskorn S als auch durch die Schmutzpartikel. Trotzdem ist das Rapskorn S deutlich von dem Schmutz zu unterscheiden.

Fig. 11 zeigt die digitalen Empfangssignale mehrerer Zeilen Z für ein Rübenkorn.

Hierbei ist die abgeschattete Fläche AF über 19 aufeinander folgende, durch die Empfangseinrichtung 5 abgetastete Zeilen Z dargestellt. In jeder Zeile Z sind die abgeschatteten Empfangselemente 12 bzw. abgeschattete Punkte AP durch ein "0"-Zeichen und die berechneten Mittelpunkte MP durch ein "I"-Zeichen markiert. Das Rübenkorn ist sowohl anhand der Länge und Breite der abgeschatteten Fläche AF als auch anhand der geradlinig verlaufenden Mittelpunkte MP in der abgeschatteten Fläche AF zu erkennen.

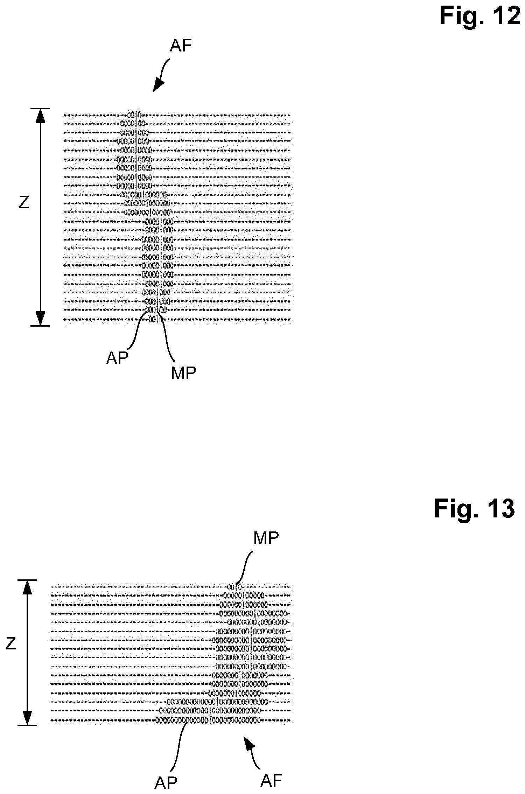

Fig. 12 zeigt die digitalen Empfangssignale mehrerer Zeilen Z für einen Doppeltreffer von zwei Rapskörnern.

Hierbei ist die abgeschattete Fläche AF über 30 aufeinander folgende, durch die Empfangseinrichtung 5 abgetastete Zeilen Z dargestellt. Obwohl die abgeschattete Fläche AF nahezu doppelt so lang ist wie die eines Einzelkorns, sind trotzdem zwei unmittelbar aufeinander folgende Rapskörner aufgrund der Verschiebung der Mittelpunkte MP in den mittleren Zeilen Z zu erkennen.

Fig. 13 zeigt die digitalen Empfangssignale mehrerer Zeilen Z für die Abtastung von Schmutz.

Hierbei ist die abgeschattete Fläche AF über 15 aufeinander folgende, durch die Empfangseinrichtung 5 abgetastete Zeilen Z dargestellt. In diesem Fall entspricht die abgeschattete Fläche AF weder der Länge noch der Breite eines Saatkorns und darüber hinaus sind mehrere Verschiebungen der Mittelpunkte MP in der abgeschatteten Fläche AF zu erkennen. Demzufolge wird diese Abtastung als Schmutzpartikel bewertet.

### Bezugszeichen

- 1: Fallrohrsensor
- 2: Fallrohr
- 4: Sendeeinrichtung
- 5: Empfangseinrichtung
- 6: Erstes Gehäuseelement
- 7: Zweites Gehäuseelement
- 8: Befestigungsband
- 9: Erste Öffnung
- 10: Zweite Öffnung
- 11: Zeilenelement
- 12: Empfangselement
- 13: Leuchtdiode
- 14: Lochblende
- 15: Reflektorelement
- 16: Eintrittsfläche
- 17: Austrittsfläche
- 18: Reflexionsfläche
- 19: Auswerteeinheit
- 20: A/D-Wandler
- 21: Speicher
- 22: Mikrocontroller
- 23: Schnittstelle
- 24: Spannungsversorgung
- 25: Zeilenelementsteuerung
- 26: Leuchtdiodentreiber
- 27: Empfangssignal
- 28: Auswertesignal
- 29: Sättigungspegel
- 30: Schutzscheibe
- 31: Wölbung
- 32: Versorgung Sendeeinrichtung
- 33: Schwellwert
- AF: Abgeschattete Fläche
- AP: Abgeschatteter Punkt
- E: Empfangsachse
- LB: Lichtband
- LS: Lichtstrahl
- M: Messfeld
- MP: Mittelpunkt
- S: Korn, Saatkorn
- Z: Zeile

## Patentansprüche

1. Fallrohrsensor (1) zur Einzelkornerkennung von Körnern (S) in einem Fallrohr (2) mit einem vorgegebenen Messfeld (M), an der eine Sendeeinrichtung (4) und eine Empfangseinrichtung (5) im Abstand zueinander angeordnet sind, wobei die von der Sendeeinrichtung (4) ausgesendeten Lichtstrahlen (LS) bei freiem Strahlengang durch den Fallrohr-Innenraum (2) auf die Empfangseinrichtung (5) geführt sind und bei einem Durchflug eines Korns (S) zumindest teilweise abgeschwächt sind, und bei dem die Empfangseinrichtung (5) von einem eine vorgegebene Anzahl von Empfangselementen (12) aufweisenden Zeilenelement (11) gebildet ist,
**dadurch gekennzeichnet,**
**dass** die Sendeinrichtung (4) aus einer oder mehreren in einer Zeile angeordnete Leuchtdioden (13) mit Lochblenden (14) und ein prismenförmiges Reflektorelement (15) umfasst, das als ein rechtwinkliges Dreieck ausgeführt ist, bei dem die beiden senkrecht aufeinander stehenden Flächen eine Ein- (16) und Austrittsfläche (17) und die dritte Fläche eine Reflexionsfläche (18) bilden, und die Lichtstrahlen (LS) von den Leuchtdioden (13) quer zu einer Empfangsachse (E) der Empfangseinrichtung (5) ausgesendet und über die Lochblenden (14) gebündelt werden und anschließend über die Eintrittsfläche (16) in das Reflektorelement (15) geführt und über dessen Reflexionsfläche (18) durch Totalreflexion zur Austrittsfläche (17) zu einem Lichtband (LB) von parallel ausgerichteten Lichtstrahlen (LS) umgelenkt werden, so dass das Lichtband (LB) im Messfeld (M) den gesamten Fallrohr-Innenraum (2) mit annähernd gleich starker Intensität vollständig ausleuchtet und parallel zur Empfangsachse (E) der Empfangseinrichtung (5) darin eintritt, wobei über dessen Zeilenelement (11) die gesamte Breite des Fallrohr-Innenraums (2) und damit das Lichtband (LB) lückenlos erfasst wird, und dass Mittel zur Erkennung von Flächen von im Lichtband (LB) angeordneten Körnern (S) vorgesehen sind.

2. Fallrohrsensor (1) nach Anspruch 1, **dadurch gekennzeichnet,**
**dass** die Reflexionsfläche (18) mehrere konvexe Wölbungen (31) besitzt, die jeweils vor einer Leuchtdiode (13) sitzen, so dass eine Parallelisierung der Lichtstrahlen (LS) erfolgt.

3. Fallrohrsensor (1) nach Anspruch 1, **dadurch gekennzeichnet,**
**dass** das Reflektorelement (15) aus einem transparenten Kunststoff wie Polymethylmethacrylat (PMMA) bzw. Acrylglas hergestellt ist.

4. Fallrohrsensor (1) nach Anspruch 1, **dadurch gekennzeichnet,**
**dass** die Sendeeinrichtung (4) in einem ersten Gehäuseelement (6) und die Empfangseinrichtung (5) in einem zweiten Gehäuseelement (7) angeordnet sind, die beidseitig an dem Messfeld (M) in einer ersten (9) und einer zweiten transparenten Öffnung (10) des Fallrohrs (2) entlang der Empfangsachse (E) angebracht sind.

5. Fallrohrsensor (1) nach Anspruch 4, **dadurch gekennzeichnet,**
**dass** die Sende- (4) und Empfangseinrichtung (5) jeweils mit einer Schutzscheibe (30) die erste (9) bzw. zweite Öffnung (10) des Fallrohrs (2) abschließen, wobei die Schutzscheibe (30) plan zum Fallrohr-Innenraum (2) ausgeführt ist, um Schmutz-Ansammlungen zu vermeiden.

6. Fallrohrsensor (1) nach Anspruch 1, **dadurch gekennzeichnet,**
**dass** die Leuchtdioden (13) Lichtstrahlen (LS) einer Wellenlänge im Spektralbereich zwischen 550 nm und 1100 nm erzeugen.

7. Fallrohrsensor (1) nach Anspruch 1, **dadurch gekennzeichnet,**
**dass** die Empfangseinrichtung (5) einen optischen Zeilensensor als Zeilenelement (11) umfasst, welches als PIN-Dioden-Zeilenelement, CCD-Zeilenelement oder als CMOS-Zeilenelement ausgebildet ist.

8. Fallrohrsensor (1) nach Anspruch 7, **dadurch gekennzeichnet,**
**dass** der Zeilensensor ein Auflösung von mehr als 50 DPI aufweist, wodurch kleine Saatkörner (S) erkannt und von Schmutzpartikeln unterscheidbar sind.

9. Fallrohrsensor (1) nach Anspruch 7, **dadurch gekennzeichnet,**
**dass** der Zeilensensor mit einer Taktfrequenz von mehr als 1 MHz getaktet wird, um insbesondere kleine Saatkörner (S) bei einer sehr hohen Fallgeschwindigkeit mehrfach abzutasten.

10. Fallrohrsensor (1) nach Anspruch 1, **dadurch gekennzeichnet,**
**dass** die Mittel zur Erkennung von Flächen von Körnern (S) wenigstens eine Auswerteeinheit (19) zur Auswertung der am Ausgang der Empfangseinrichtung (5) anstehenden analogen Empfangssignale (27) aufweisen.

11. Fallrohrsensor (1) nach Anspruch 10, **dadurch gekennzeichnet,**
**dass** die Auswerteeinheit (19) wenigstens einen A/D-Wandler (20) zur Digitalisierung des analogen Empfangssignals (27), einen Speicher (21) zum Speichern mehrerer abgetasteter Zeilen (Z) und zum Speichern von vorgegebenen Referenzwerten, einen Mikrocontroller (22) zur Bewertung der gespeicherten Zeilen (Z) anhand der gespeicherten Referenzwerte, eine Schnittstelle (23) zum Empfang neuer bzw. geänderter Referenzwerte und zur Ausgabe eines Auswertesignals (28) des Mikrocontrollers (23), sowie einen Leuchtdiodentreiber (26) zur Einstellung des Stroms der Leuchtdioden (13) über eine Versorgungsleitung (32) umfasst.

12. Verfahren zur Einzelkornerkennung mit dem Fallrohrsensor (1) nach einem der vorstehenden Ansprüche, mit den Schritten:
(i) Ausleuchten des Messfeldes (M) mittels des Leuchtbandes (LB) der Sendeeinrichtung (4),
(ii) zyklisches Abtasten aufeinanderfolgender Zeilen (Z) durch die Empfangseinrichtung (5),
(iii) Fördern von vereinzelten Körnern (S) im Fallrohr (2) durch das vorgegebene Messfeld (M),
(iv) Unterbrechen des Leuchtbandes (LB) durch ein Korn (S) oder einen Schmutzpartikel,
(v) Speichern der aktuell abgetasteten Zeilenwerte im Speicher (22),
(vi) Auswerten der aktuell abgetasteten Zeilenwerte zur Ermittlung der abgeschatteten Punkte (AP) während des Durchflugs des Korns (S) pro Zeile (Z),
(vii) Bilden des Mittelpunktes (MP) der abgeschatteten Punkte (AP) pro Zeile (Z),
(viii) Ermitteln der Fläche (AF) abgeschatteter Punkte (AP) über mehrere Zeilen (Z),
(ix) Bewerten der abgeschatteten Fläche (AF) durch Vergleich mit gespeicherten Referenzwerten der Körner (S) durch den Mikrocontroller (22),
(x) Erkennen von einzelnen Körnern (S) anhand der vorgenommenen Bewertung,
(xi) Ausblenden von Schmutzpartikeln und fremden Körnern,
(xii) Ausgeben des Auswertesignals (28) mit Informationen über erkannte Körner (S) über die Schnittstelle (23).

13. Verfahren zur Einzelkornerkennung nach Anspruch 12, **dadurch gekennzeichnet, dass** die Zeitspanne zwischen zwei aufeinander folgende erkannte Körner (S) im Fallrohr (2) und/oder die Anzahl der erkannten Körner (S) ermittelt wird, die in einer vorgegebenen Zeitspanne durch das Fallrohr (2) fallen.

14. Verfahren zur Einzelkornerkennung nach Anspruch 12, **dadurch gekennzeichnet, dass** die Referenzwerte Werte für die Länge, Breite und den Versatz von Mittelpunkten (MP) der Körner (S) umfassen und im Speicher (21) gespeichert werden.

15. Verfahren zur Einzelkornerkennung nach Anspruch 14, **dadurch gekennzeichnet, dass** der Fallrohrsensor (1) durch Speichern von unterschiedlichen Referenzwerten im Speicher (21) auf Saatkörner (S) unterschiedlicher Form wie Mais, Sonnenblume, Weizen, Soja, Rüben oder Raps einstellbar ist.

16. Verfahren zur Einzelkornerkennung nach Anspruch 15, **dadurch gekennzeichnet, dass** über die Schnittstelle (23) neue oder geänderte Referenzwerte von einer Applikation übertragen werden und/oder eine Auswahl der unterschiedlichen Referenzwerte getroffen wird.

17. Verfahren zur Einzelkornerkennung nach Anspruch 12, **dadurch gekennzeichnet, dass** die Intensität der Lichtstrahlen (LS) von dem Leuchtdiodentreiber (26) so geregelt wird, dass eine Kompensation der Verschmutzung der Schutzscheiben (30) ermöglicht wird.

18. Verwendung des Fallrohrsensors (1) nach einem der Ansprüche 1-11, in landwirtschaftlichen Maschinen, die landwirtschaftliche Materialien in einem Gutstrom von Körnern (S) fördern.

19. Verwendung des Fallrohrsensors (1) nach Anspruch 18, **dadurch gekennzeichnet, dass** die landwirtschaftliche Maschine eine Einzelkornsämaschine ist, die einzelne Saatkörner (S) im Fallrohr (2) zur Aussaat in den Boden ablegen.

20. Verwendung des Fallrohrsensors (1) nach Anspruch 18, **dadurch gekennzeichnet, dass** die landwirtschaftliche Maschine eine pneumatische oder mechanische Drillmaschine oder ein Düngerstreuer ist.

21. Verwendung des Fallrohrsensors (1) nach Anspruch 18, **dadurch gekennzeichnet, dass** er über die Schnittstelle (24) in ein Steuerungssystem der landwirtschaftlichen Maschine integriert wird, zur Überwachung und/oder Anzeige der Vereinzelungsqualität, für Diagnosezwecke und Updatevorgänge.

22. Verwendung des Fallrohrsensors (1) nach Anspruch 21, **dadurch gekennzeichnet, dass** er in das Steuerungssystem zur Regelung oder Steuerung der Dosierung bzw. Vereinzelung der Körner (S) auf Basis eines vorgegebenen Ablagemusters eingebunden wird.

## Claims

1. Downpipe sensor (1) for single seed identification of seeds (S) in a downpipe (2) having a predetermined measuring field (M), on which a transmitting device (4) and a receiving device (5) are arranged spaced with respect to one another, wherein the light beams (LS) that are emitted by the transmitting device (4) are guided in the case of a clear beam path through the downpipe interior space (2) to the receiving device (5) and in the event of a seed (S) passing through, said light beams are at least in part attenuated, and wherein the receiving device (5) is formed from a line element (11) that comprises a predetermined number of receiving elements (12),
**characterised in that**
the transmitting device (4) comprises one or multiple light-emitting diodes (13), which are arranged in a line and have perforated screens (14), and a prism-shaped reflector element (15) that is embodied as a right-angled triangle in which the two surfaces that are perpendicular to one another form an entrance surface (16) and exit surface (17) and the third surface forms a reflection surface (18) and the light beams (LS) are emitted by the light diodes (13) transverse with respect to a receiving axis (E) of the receiving device (5) and are bundled via the perforated screens (14) and are subsequently guided via the entrance surface (16) into the reflector element (15) and are deflected via the reflection surface (18) of said reflector element by means of total internal reflection towards the exit surface (17) to form a light band (LB) of light beams (LS) that are oriented parallel with the result that the light band (LB) in the measuring field (M) entirely illuminates the entire downpipe interior space (2) with an approximately identical intensity and said light band enters parallel to the receiving axis (E) of the receiving device (5), wherein the entire width of the downpipe interior space (2) and therefore the light band (LB) is completely captured via the line element (11) of said receiving device and that means are provided for the identification of surfaces of seeds (S) that are arranged in the light band (LB).

2. Downpipe sensor (1) according to claim 1, **characterised in that** the reflection surface (18) comprises multiple convex curvatures (31) that sit in each case upstream of a light-emitting diode (13) with the result that a parallelisation of the light beams (LS) is performed.

3. Downpipe sensor (1) according to claim 1, **characterised in that** the reflector element (15) is produced from a transparent synthetic material such as polymethyl methacrylate (PMMA) or acrylic glass.

4. Downpipe sensor (1) according to claim 1, **characterised in that** the transmitting device (4) is arranged in a first housing element (6) and the receiving device (5) is arranged in a second housing element (7) that are attached on the two sides of the measuring field (M) in a first (9) and a second transparent opening (10) of the downpipe (2) along the receiving axis (E).

5. Downpipe sensor (1) according to claim 4, **characterised in that** the transmitting device (4) and receiving device (5) in each case close the first (9) or second opening (10) of the down pipe (2) using a protective disc (30), wherein the protective disc (30) is embodied in a planar manner with respect to the downpipe interior space (2) in order to avoid the accumulation of dirt.

6. Downpipe sensor (1) according to claim 1, **characterised in that** the light-emitting diodes (13) generate light beams (LS) of a wavelength in the spectral range between 550 nm and 1100 nm.

7. Downpipe sensor (1) according to claim 1, **characterised in that** the receiving device (5) comprises an optical line sensor as a line element (11) that is embodied as a PIN diode line element, CCD line element or as a CMOS line element.

8. Downpipe sensor (1) according to claim 7, **characterised in that** the line sensor comprises a resolution of more than 50 DPI whereby small seeds (S) are identified and can be differentiated from soil particles.

9. Downpipe sensor (1) according to claim 7, **characterised in that** the line sensor is clocked with a clocking frequency of more than 1 MHz in order to scan in particular small seeds (S) multiple times at a particularly high falling speed.

10. Downpipe sensor (1) according to claim 1, **characterised in that** the means for identifying surfaces of seeds (S) comprise at least one evaluating unit (19) for evaluating the analogue receiving signals (27) that are prevailing at the output of the receiving device (5).

11. Downpipe sensor (1) according to claim 10, **characterised in that** the evaluating unit (19) comprises at least one A/D converter (20) for digitizing the analogue receiving signal (27), a memory storage device (21) for storing multiple scanned lines (Z) and for storing predetermined reference values, a micro controller (22) for evaluating the stored lines (Z) with reference to the stored reference values, an interface (23) for receiving new or amended reference values and for outputting an evaluating signal (28) of the microcontroller (23), and also a light-emitting diode driver (26) for setting the current of the light-emitting diodes (13) via a supply line (32).

12. Method for single seed identification using the downpipe sensor (1) according to one of the preceding claims, said method having the steps:
(i) illuminating the measuring field (M) by means of the light band (LB) of the transmitting device (4),
(ii) cyclical scanning of consecutive lines (Z) by means of the receiving device (5),
(iii) conveying isolated seeds (S) in the downpipe (2) through the predetermined measuring field (M),
(iv) interrupting the light band (LB) by means of a seed (S) or a soil particle,
(v) storing the prevailing scanned line values in the memory storage device (22),
(vi) evaluating the prevailing scanned line values so as to determine the shaded points (AP) during the passage of the seed (S) per line (Z),
(vii) forming the central point (MP) of the shaded points (AP) per line (Z),
(viii) determining the surface (AF) of shaded points (AP) over multiple lines (Z),
(ix) evaluating the shaded surface (AF) by means of comparison with stored reference values of the seeds (S) by means of the microcontroller (22),
(x) identifying individual seeds (S) with reference to the evaluation that is performed,
(xi) masking soil particles and unknown seeds,
(xii) outputting via the interface (23) the output signal (28) with information regarding seeds (S) that have been identified.

13. Method for single seed identification according to claim 12, **characterised in that** the time span between two consecutive identified seeds (S) in the downpipe (2) is determined and/or the number of the identified seeds (S) that fall through the downpipe (2) in a predetermined time span is determined.

14. Method for single seed identification according to claim 12, **characterised in that** the reference values comprise values for the length, width and the offset of central points (MP) of the seeds (S) and are stored in the memory storage device (21).

15. Method for single seed identification according to claim 14, **characterised in that** the downpipe sensor (1) can be set by means of storing different reference values in the memory storage device (21) for seeds (S) of different forms such as maize, sunflower, wheat, soya, beets or rapeseed.

16. Method for single seed identification according to claim 15, **characterised in that** via the interface (23) new or amended reference values are transmitted by an application and/or a selection of the different reference values is made.

17. Method for single seed identification according to claim 12, **characterised in that** the intensity of the light beams (LS) is regulated by the light-emitting diode driver (26) with the result that it is rendered possible to compensate for the contamination of the protective discs (30).

18. Use of the downpipe sensor (1) according to one of claims 1-11 in agricultural machines that convey agricultural material in a crop flow of seeds (S).

19. Use of the downpipe sensor (1) according to claim 18, **characterised in that** the agricultural machine is a single seed sowing machine that deposits single seeds (S) in the downpipe (2) for sowing in the ground.

20. Use of the downpipe sensor (1) according to claim 18, **characterised in that** the agricultural machine is a pneumatic or mechanical seed drill or a fertilizer spreader.

21. Use of the downpipe sensor (1) according to claim 18, **characterised in that** said downpipe sensor is integrated via the interface (24) into a control system of the agricultural machine so as to monitor and/or display the isolation quality for diagnostic purposes and updating procedures.

22. Use of the downpipe sensor (1) according to claim 21, **characterised in that** said downpipe sensor is incorporated into the control system so as to regulate or control the dosing or isolation of the seeds (S) on the basis of a predetermined deposition pattern.

## Revendications

1. Capteur pour tuyau de descente (1) destiné à la reconnaissance granulaire unitaire de graines (S) dans un tuyau de descente (2) à l'aide d'un champ de mesure (M) prédéfini, un dispositif d'émission (4) et un dispositif de réception (5) y étant disposés de manière à être espacés l'un de l'autre, les rayons lumineux (LS) émis par le dispositif d'émission (4) ayant une trajectoire qui s'étend, lors qu'elle est libre, à travers l'enceinte (2) du tuyau de descente jusqu'au dispositif de réception (5) alors qu'ils sont au moins partiellement atténués lors du passage d'une graine (S), et le dispositif de réception (5) étant réalisé sous forme d'un élément de ligne (11) comportant un nombre prédéfini d'éléments de réception (12),
**caractérisé en ce que**
le dispositif d'émission (4) comprend une ou plusieurs diodes électroluminescentes (13), disposées dans une ligne et pourvues de diaphragmes (14), et un élément réfléchissant (15) en forme de prisme qui est réalisé sous forme un triangle rectangle, chez lequel les faces en disposition perpendiculaire l'une à l'autre forment les faces d'entrée (16) et de sortie (17) et la troisième face forme une face de réflexion (18), et les rayons lumineux (LS) en provenance des diodes électroluminescentes (13) sont envoyés selon une direction transversale par rapport à un axe de réception (E) du dispositif de réception (5) puis focalisés en passant par les diaphragmes (14) pour ensuite être menés, en passant par la face d'entrée (16), dans l'élément réfléchissant (15) dont la face de réflexion (18) provoque leur réflexion totale et déviation vers la face de sortie (17) sous forme d'une bande lumineuse (LB) de rayons lumineux (LS) à orientation parallèle, faisant en sorte que la bande lumineuse (LB) vienne éclairer, au sein du champ de mesure (M), la totalité de l'enceinte (2) du tuyau de descente avec une intensité approximativement égale et arrive, selon une direction parallèle à l'axe de réception (E), au sein du dispositif de réception (5), ce dernier permettant, à travers son élément de ligne (11), de couvrir toute la largeur de l'enceinte (2) du tuyau de descente et ainsi l'intégralité de la bande lumineuse (LB), et qu'il est pourvu de moyens destinés à reconnaître des surfaces de graines (S) se trouvant dans la bande lumineuse (LB).

2. Capteur pour tuyau de descente (1) selon la revendication 1, **caractérisé en ce que** la face de réflexion (18) possède plusieurs courbures (31) convexes qui sont chacune placées en amont d'une diode électroluminescente (13) faisant en sorte que les rayons lumineux (LS) soient désormais parallèles les uns aux autres.

3. Capteur pour tuyau de descente (1) selon la revendication 1, **caractérisé en ce que** l'élément réfléchissant (15) est réalisé en une matière plastique transparente telle que le polyméthacrylate de méthyle (PMMA), également appelé verre acrylique.

4. Capteur pour tuyau de descente (1) selon la revendication 1, **caractérisé en ce que** le dispositif d'émission (4) est disposé dans un premier élément de boîtier (6) et le dispositif de réception (5) dans un deuxième élément de boîtier (7), ceux-ci étant montés, des deux côtés du champ de mesure (M), dans un premier (9) et un deuxième (10) orifices transparents du tuyau de descente (2) le long de l'axe de réception (E).

5. Capteur pour tuyau de descente (1) selon la revendication 4, **caractérisé en ce que** les dispositifs d'émission (4) et de réception (5) viennent chacun fermer, au moyen d'une plaque de protection (30), le premier (9) et deuxième (10) orifices, respectivement, la plaque de protection (30) étant réalisée de manière à ce qu'elle soit plane par rapport à l'enceinte (2) du tuyau de descente pour ainsi éviter l'accumulation de salissures.

6. Capteur pour tuyau de descente (1) selon la revendication 1, **caractérisé en ce que** les diodes électroluminescentes (13) produisent des rayons lumineux (LS) dont la longueur d'onde se situe dans le domaine spectral compris entre 550 nm et 1100 nm.

7. Capteur pour tuyau de descente (1) selon la revendication 1, **caractérisé en ce que** le dispositif de réception (5) comprend, en tant qu'élément de ligne (11), un capteur de ligne optique qui est réalisé sous forme d'un élément de ligne à diodes PIN, d'un élément de ligne CCD ou d'un élément de ligne CMOS.

8. Capteur pour tuyau de descente (1) selon la revendication 7, **caractérisé en ce que** le capteur de ligne présente une résolution supérieur à 50 DPI, permettant ainsi de reconnaître de petites graines de semence (S) et de les distinguer de particules contaminantes.

9. Capteur pour tuyau de descente (1) selon la revendication 7, **caractérisé en ce que** le capteur de ligne est cadencée à une fréquence supérieure à 1 MHz, permettant ainsi de scanner notamment de petites graines de semence (S) plusieurs fois lorsque leur vitesse de chute est importante.

10. Capteur pour tuyau de descente (1) selon la revendication 1, **caractérisé en ce que** lesdits moyens destinés à reconnaître des surfaces de graines (S) comportent au moins une unité d'analyse (19) permettant d'analyser les signaux de réception (27) analogiques tels que présents à la sortie du dispositif de réception (5).

11. Capteur pour tuyau de descente (1) selon la revendication 10, **caractérisé en ce que**
l'unité d'analyse (19) comprend au moins un convertisseur A/N (20) servant à numériser le signal de réception (27) analogique, une mémoire (21) servant à enregistrer plusieurs lignes (Z) scannées et à enregistrer des valeurs de référence préalablement définies, un microcontrôleur (22) servant à évaluer les lignes (Z) enregistrées par rapport aux valeurs de référence enregistrées, une interface (23) servant à recevoir des valeurs de référence nouvelles ou modifiées et à émettre un signal de sortie (28) du microcontrôleur (23), ainsi qu'un pilote de diodes électroluminescentes (26) servant à ajuster le courant des diodes électroluminescentes (13) à travers une ligne d'alimentation (32).

12. Procédé de reconnaissance granulaire unitaire à l'aide du capteur de tuyau de descente (1) selon l'une des revendications précédentes, comportant les étapes suivantes:
(i) éclairage du champ de mesure (M) au moyen de la bande lumineuse (LB) du dispositif d'émission (4),
(ii) lecture cyclique des lignes (Z) successives par le dispositif de réception (5),
(iii) transport de graines (S) unitaires dans le tuyau de descente (2) à travers le champ de mesure (M) prédéfini,
(iv) interruption de la bande lumineuse (LB) par une graine (S) ou une particule contaminante,
(v) enregistrement des valeurs de ligne selon la lecture actuelle dans la mémoire (22),
(vi) analyse des valeurs de ligne selon la lecture actuelle, afin d'identifier les points ombragés (AP) pendant le passage de la graine (S) par ligne (Z),
(vii) établissement du centre géométrique (MP) des points ombragés (AP) par ligne (Z),
(viii) détermination de la surface (AF) des points ombragés (AP) sur plusieurs lignes (Z),
(ix) évaluation de la surface ombragée (AF), en la comparant aux valeurs de référence enregistrées des graines (S), par le microcontrôleur (22),
(x) reconnaissance de graines (S) unitaires en se basant sur l'évaluation effectuée,
(xi) masquage de particules contaminantes et de graines étrangères,
(xii) émission, à travers l'interface (23), du signal de sortie (28) comportant des informations sur des graines (S) reconnues.

13. Procédé de reconnaissance granulaire unitaire selon la revendication 12, **caractérisé en ce que**
l'on détermine le laps de temps qui s'écoule entre deux graines (S) reconnues successivement dans le tuyau de descente (2) et/ou le nombre de graines (S) reconnues qui chutent à travers le tuyau de descente (2) dans un laps de temps préalablement défini.

14. Procédé de reconnaissance granulaire unitaire selon la revendication 12, **caractérisé en ce que**
les valeurs de référence comprennent des valeurs concernant la longueur, la largeur et le décalage des centres géométriques (MP) des graines (S) et qu'elles sont enregistrées dans la mémoire (21).

15. Procédé de reconnaissance granulaire unitaire selon la revendication 14, **caractérisé en ce que**
le capteur de tuyau de descente (1) peut être adapté, en enregistrant différentes valeurs de référence dans la mémoire (21), à des graines de semence (S) de forme différente tel que le mais, le tournesol, le blé, le soja, la betterave ou le colza.

16. Procédé de reconnaissance granulaire unitaire selon la revendication 15, **caractérisé en ce que**
l'interface (23) permet de transmettre, depuis une application, des valeurs de référence nouvelles ou modifiées et/ou d'opérer un choix entre les différentes valeurs de référence.

17. Procédé de reconnaissance granulaire unitaire selon la revendication 12, **caractérisé en ce que**
le pilote (26) des diodes électroluminescentes permet de régler l'intensité des rayons lumineux (LS) de manière à ce que l'encrassement des vitres de protection (30) puisse être compensé.

18. Utilisation du capteur de tuyau de descente (1) selon l'une des revendications 1 à 11 dans des machines agricoles servant à transporter des matières agricoles sous forme d'un flux de graines (S).

19. Utilisation du capteur de tuyau de descente (1) selon la revendication 18, **caractérisée en ce que**
ladite machine agricole est un semoir monograine permettant de déposer des graines de semence (S) unitaires dans le tuyau de descente (2) en vue de leur semis dans le sol.

20. Utilisation du capteur de tuyau de descente (1) selon la revendication 18, **caractérisée en ce que**
la machine agricole est un semoir à lignes au fonctionnement pneumatique ou mécanique ou un épandeur d'engrais.

21. Utilisation du capteur de tuyau de descente (1) selon la revendication 18, **caractérisée en ce que**
l'interface (24) permet d'intégrer ce dernier dans un système de commande de la machine agricole, pour ainsi contrôler et/ou afficher la qualité du fonctionnement monograine, à des fins diagnostiques et de mise à jour.

22. Utilisation du capteur de tuyau de descente (1) selon la revendication 21, **caractérisé en ce que**
ce dernier est intégré au système de commande permettant de régler ou commander le dosage et/ou la mise à disposition une à une des graines (S) sur la base d'un schéma de pose prédéfini.
